# EUROPÄISCHE PATENTSCHRIFT

(11) **EP 4 000 874 B1**
(45) Veröffentlichungstag und Bekanntmachung des Hinweises auf die Patenterteilung: **04.10.2023**
(21) Anmeldenummer: 21189692.3
(22) Anmeldetag: 04.08.2021
(51) Int. Cl.: B29C 65/22, B65B 7/28, B65B 9/04, B65B 25/00, B65B 43/46, B65B 51/14, B65B 57/00, B65B 69/00, B65B 51/10

(54) **VERFAHREN UND VORRICHTUNG ZUM HERSTELLEN UND PRÜFEN EINER VERPACKUNG**
METHOD AND DEVICE FOR MANUFACTURING AND TESTING A PACKAGE
PROCÉDÉ ET DISPOSITIF DE FABRICATION ET D'ESSAI D'UN EMBALLAGE

(30) Priorität: 23.11.2020 EP 20209303
(43) Veröffentlichungstag der Anmeldung: 25.05.2022
(73) Patentinhaber: KOCH Pac-Systeme GmbH, 72285 Pfalzgrafenweiler (DE)
(72) Erfinder: Bitzer, Jürgen, 72160 Horb (DE); Maier, Jens, 77776 Bad Rippoldsau (DE); Eppler, Markus, 72285 Herzogsweiler (DE); Helber, Frank, 72221 Haiterbach (DE)
(74) Vertreter: Wächter, Jochen

(56) Entgegenhaltungen:
- DE-A1-102016 117 834

## Beschreibung

Die vorliegende Erfindung betrifft ein Verfahren und eine Vorrichtung zum Herstellen und Prüfen einer Verpackung, insbesondere einer heißversiegelten Kunststoffverpackung.

Zum Verpacken von Produkten werden häufig Verpackungen verwendet, die eine in einem Formteil ausgebildete Produktaufnahme aufweisen, die mittels eines Deckmaterials verschlossen ist. Nach dem Befüllen der Produktaufnahme mit dem Produkt wird das Deckmaterial entlang einer Siegelnaht, die die Produktaufnahme umgibt, an das Formteil gesiegelt. Die DE 10 2016 117 834 A1 offenbart beispielsweise ein Siegelwerkzeug zum Erzeugen einer Siegelnaht, das mindestens zwei Heizleiter zum Beheizen von Teilabschnitten eines Heizelements umfasst, die unterschiedlich ansteuerbar sind. Dadurch kann über die Oberfläche des Heizelements ein Temperaturprofil erzeugt werden, um die Siegeltemperatur lokal präzise einzustellen. Die Temperatur kann durch mindestens einen Sensorleiter in unmittelbarer Nähe zum Heizleiter erfasst werden oder dadurch, dass die Heizleiter gleichzeitig als Sensorleiter dienen.

Ein wesentliches Qualitätsmerkmal solcher Verpackungen ist die Ausprägung der Siegelnaht, die nicht nur unmittelbar nach der Herstellung sondern über eine gewisse Lebensdauer oder Haltbarkeit eine feste Verbindung zwischen dem Formteil und dem Deckmaterial sowie die Dichtheit der verschlossenen Produktaufnahme gewährleisten muss. Weist die Siegelnaht einen Fehler auf, wirkt sich dies in der Regel nachteilig auf die Haltbarkeit der verpackten Produkte aus.

Eine mögliche Fehlerquelle ist beispielsweise die Störung der Siegelfläche zwischen Formteil und Deckmaterial durch ein nicht ordnungsgemäß aufgenommenes Produkt oder Teile davon, Materialfehler des Formteils oder des Deckmaterials, oder durch Verunreinigung, die dazu führen können, dass das Formteil und das Deckmaterial entlang der Siegelfläche nicht vollständig anliegen und aneinander gesiegelt werden können. Verunreinigungen der Siegelfläche können zum Beispiel aus dem Arbeitsumfeld der Verpackungsmaschine oder während des Füllprozesses der Produktaufnahme mit Solida oder einem Fluid auf die zu siegelnden Bereiche des Formteils oder des Deckmaterials gelangen.

Aus dem Stand der Technik sind daher Vorrichtungen bekannt, die die Siegelfläche vor dem Siegeln überprüfen und reinigen. Eine weit verbreitete Methode dazu ist die optische Überprüfung, bei der nicht ordnungsgemäß aufgenommene Produkte oder Teile davon sowie andere Verunreinigungen der Siegelfläche durch Kameras erkannt werden. Von Blisterpackungen für pharmazeutische Produkte ist es zum Beispiel auch bekannt, die Produkte mittels Bürsten in die Produktaufnahmen zu bewegen und dadurch eine freie Siegelfläche zu ermöglichen.

Sind die Produktaufnahmen mit einem Fluid zu befüllen, wie dies beispielsweise bei Kontaktlinsenverpackungen der Fall ist, wird die Siegelfläche des Formteils nach dem Befüllen der Produktaufnahmen mit dem Fluid häufig in einem weiteren Schritt gereinigt, um etwaige Tröpfchen von der Siegelfläche zu entfernen.

Die WO 2005/001356 A1 offenbart hierzu eine Vorrichtung und ein Verfahren, bei der jede Siegelfläche individuell von einem Vakuumsauger abgefahren und dadurch Feuchtigkeit von der Siegelfläche entfernt wird. Gemäß US 2012/0037183 A1 wird das Formteil entlang eines saugfähigen Materials geführt, das Flüssigkeit auf der Siegelfläche absorbiert und diese dadurch trocknet. Die EP 2 217 428 B1 beschreibt weiterhin ein Siegelwerkzeug, dessen Kontaktfläche derart geformt ist, dass Tropfen auf der Siegelfläche vor dem Siegeln verdrängt werden.

Es ist ersichtlich, dass insbesondere bei solchen Verpackungen, die ein Fluid enthalten, ein großer Aufwand durch weitere Behandlungsschritte und zusätzliche Vorrichtungen erforderlich ist, um eine ausreichende Qualität der Siegelnaht zu gewährleisten. Dennoch kann nicht ohne weitere Tests sichergestellt werden, dass die erzeugte Siegelnaht tatsächlich die gewünschte Qualität aufweist und dicht ist.

Es ist daher eine Aufgabe der vorliegenden Erfindung, ein Verfahren und eine Vorrichtung zum Herstellen und Prüfen einer Verpackung bereitzustellen, die eine einfache, kostengünstige sowie zuverlässige Beurteilung der Qualität der Siegelnaht ermöglichen.

Diese Aufgabe wird durch den Gegenstand der unabhängigen Ansprüche 1 und 15 gelöst. Vorteilhafte Ausführungsformen sind Gegenstand der Unteransprüche.

Ein erfindungsgemäßes Verfahren zum Herstellen und Prüfen einer Verpackung, insbesondere einer heißversiegelten Kunststoffverpackung, die zumindest eine mittels einer Deckfolie verschlossene Produktaufnahme eines Formteils umfasst, weist die folgenden Schritte auf:
a) Siegeln der Deckfolie an das Formteil entlang einer Siegelnaht, die die zumindest eine Produktaufnahme umgibt, mittels einer Siegelvorrichtung, die eine Siegelkontur aufweist, die in eine Mehrzahl von Segmenten eingeteilt ist,
b) Erfassen eines Parameters, der kennzeichnend für eine Siegelqualität der Siegelnaht ist, in jedem Segment der Mehrzahl von Segmenten entlang der Siegelnaht durch die Siegelvorrichtung,
c) Erkennen einer Störung des Siegelns gemäß Schritt a), insbesondere einer Störung der Siegelnaht oder der Siegelvorrichtung, basierend auf dem gemäß Schritt b) in jedem Segment der Mehrzahl von Segmenten erfassten Parameter.

Auf diese Art und Weise wird ein Verfahren bereitgestellt, bei dem die Siegelvorrichtung einen Parameter erfasst, der für die Qualität der Siegelnaht kennzeichnend ist und aus dem sich somit unmittelbar im Anschluss an das Siegeln Aussagen über die Qualität der erzeugten Siegelnaht ableiten lassen. Zusätzliche Vorrichtungen, die aufgrund ihres Aufbaus, ihres Antriebs und ihrer Steuerung die Komplexität und Kosten einer Verpackungsmaschine erhöhen, sind dazu nicht erforderlich. Durch die Einteilung der Siegelkontur in eine Mehrzahl von Segmenten, kann für jedes Segment erkannt werden, ob die Siegelnaht dort ordnungsgemäß ausgebildet wird. Auch geringe Störungen, wie zum Beispiel durch kleine Verunreinigungen wie Staub oder Tröpfchen, können dadurch zuverlässig erkannt werden. Die Fehlererkennung erfolgt somit mit einer großen Genauigkeit und hohen Auflösung.

Störungen der Siegelnaht, wie z.B. eine Unterbrechung oder Schwächung der Siegelnaht, und Störungen der Siegelvorrichtung, wie z.B. eine zu hohe oder zu niedrige Siegeltemperatur, sind durch einen fehlerhaften Siegelvorgang bedingt oder können zu einem solchen führen und sind daher ursächlich für eine mangelhafte Qualität der Siegelnaht. Das Verfahren ermöglicht das zuverlässige Erkennen dieser Störungen.

In einer bevorzugten Ausführungsform umfasst Schritt b) das Erfassen eines Ist-Werts des Parameters in jedem Segment der Mehrzahl von Segmenten und Schritt c) umfasst:
c1) Vergleichen des erfassten Ist-Werts des Parameters jedes Segments der Mehrzahl von Segmenten mit einem Soll-Wert des Parameters für das jeweilige Segment;
c2) Feststellen für jedes Segment der Mehrzahl von Segmenten, ob eine Abweichung zwischen dem Ist-Wert und dem Soll-Wert des Parameters vorliegt;
c3) Erkennen der Störung des Siegelns gemäß Schritt a) basierend auf einer nach Schritt c2) festgestellten Abweichung zwischen dem Ist-Wert und dem Soll-Wert des Parameters.

Das Siegeln erfolgt bevorzugt durch thermisches Siegeln bzw. Heißsiegeln. Die Siegelvorrichtung umfasst hierzu die Siegelkontur, die die Deckfolie oder das Formteil kontaktiert und die erforderliche Wärme zum Erzeugen der Siegelnaht einleitet. Weiterhin umfasst die Siegelvorrichtung eine Heizeinrichtung, insbesondere eine elektrische Widerstandsheizung, zum Erwärmen der Siegelkontur.

Es versteht sich, dass das Formteil eine Produktaufnahme oder entsprechend auch eine Mehrzahl von Produktaufnahmen aufweisen kann oder mehrere Formteile mit jeweils einer Produktaufnahme nebeneinander angeordnet sind, wobei dann vorzugsweise jeweils eine Siegelnaht eine Produktaufnahme umgibt und die Siegelvorrichtung eine der Anzahl von Produktaufnahmen bzw. Siegelnähten entsprechende Mehrzahl von Siegelkonturen aufweist. Das erfindungsgemäße Verfahren ist somit ohne weiteres auch auf solche Ausführungsformen anwendbar.

Grundsätzlich kann das Formteil bahnförmig, zum Beispiel als Formfolienbahn ausgebildet sein. Das Verfahren umfasst dann bevorzugt vor Schritt a) das Formen, insbesondere Thermoformen, zumindest einer Produktaufnahme in die Formfolienbahn und das Füllen jeder Produktaufnahme mit einem Produkt. Das Thermoformen umfasst das Bereitstellen der Formfolienbahn, das Erwärmen der Formfolienbahn mittels einer Heizvorrichtung und das Verformen der Produktaufnahme mittels einer Formvorrichtung. In Schritt a) wird dann die Deckfolie, die vorzugsweise ebenfalls bahnförmig vorliegt, an die Formfolienbahn gesiegelt. Blisterpackungen für medizinische oder pharmazeutische Produkte werden z.B. auf diese Art und Weise hergestellt.

Alternativ kann das Formteil dem Siegeln gemäß Schritt a) auch als separat gebildetes Einzelteil mit einer oder mehreren Produktaufnahmen zugeführt werden. Zum Beispiel kann das Formteil bereits aus einer größeren Einheit, wie einer Formfolienbahn, ausgestanzt oder ausgeschnitten sein oder, wie unter anderem bei Kontaktlinsenverpackungen üblich, durch Spritzguss gebildet sein. In diesem Fall umfasst das Verfahren vor Schritt a) vorzugsweise das Formen des Formteils durch Spritzgießen und das Füllen der Produktaufnahme des Formteils mit einem Produkt.

Das Formteil ist vorzugsweise aus Kunststoff, insbesondere aus Polypropylen gebildet. Die Deckfolie ist vorzugsweise eine Kunststoff- oder Metallfolie und kann auch mehrlagig ausgebildet sein.

Die Produktaufnahme ist vorzugsweise als (Blister-) Napf bzw. Hof im Formteil ausgebildet. Die Verpackung kann zum Beispiel eine Blisterpackung mit einem Blisternapf oder einer Mehrzahl von Blisternäpfen zur Aufnahme von medizinischen oder pharmazeutischen Produkten sein. Die Verpackung kann auch eine Kontaktlinsenverpackung mit einem Napf oder einer Mehrzahl von Näpfen zur Aufnahme jeweils einer Kontaktlinse und eines Fluids sein. Insbesondere in diesen Anwendungsbeispielen sind die Anforderungen an die Qualität und Dichtheit der Siegelnaht besonders hoch.

Die Produktaufnahme enthält vorzugsweise ein Produkt und/oder ein Fluid, wie beispielsweise bei Pharmazeutika oder Kosmetika. Ist die Verpackung zum Beispiel eine Kontaktlinsenverpackung, enthält die Produktaufnahme eine Kontaktlinse und eine Lösung, die die Kontaktlinse umgibt. Wenn die Produktaufnahme ein Fluid enthält, sind die Anforderungen an die Dichtheit der mittels des Siegelnaht verschlossenen Produktaufnahme hoch. Zugleich bildet das Einfüllen des Fluids in die Produktaufnahme eine besondere Fehlerquelle, da dabei Tropfen oder Spritzer des Fluids leicht auf die Siegelfläche gelangen. Das erfindungsgemäße Verfahren bietet sich in solchen Fällen besonders gut zur Qualitätskontrolle an.

Das Formteil kann im Allgemeinen einen Flansch aufweisen, der die Produktaufnahme umgibt. Der Flansch stellt die Siegelfläche bereit, auf der die Deckfolie an das Formteil gesiegelt wird. Die Siegelnaht, die die zumindest eine Produktaufnahme umgibt, ist folglich bevorzugt auf dem Flansch ausgebildet.

Die Siegelkontur der Siegelvorrichtung weist vorzugsweise eine Form auf, die mit der Form der Siegelnaht korrespondiert, insbesondere bezüglich des Verlaufs der Siegelnaht um die Produktaufnahme herum. Dadurch wird die Wärmeeinbringung durch die Siegelvorrichtung zum Siegeln gemäß Schritt a) gezielt auf den Bereich der zu erzeugenden Siegelnaht gerichtet.

Die Siegelnaht um die Produktaufnahme weist vorzugsweise eine Länge auf, die zwischen 10 und 1200 mm, mehr bevorzugt zwischen 25 und 600 mm, noch mehr bevorzugt zwischen 50 und 150 mm beträgt. Die Siegelkontur weist bevorzugt eine entsprechende Länge auf. Durch die Aufteilung der Siegelkontur in eine Mehrzahl von Segmenten auch bei so kleinen Siegelnähten erfolgt die Störungserkennung und Qualitätsbestimmung mit einer hohen Auflösung. Die Position und Auswirkung des Fehlers auf die Qualität der Siegelnaht und der Verpackung können dadurch möglichst genau und gut bestimmt werden.

Die Auflösung und Zuverlässigkeit der Störungserkennung und Qualitätsbestimmung können dadurch erhöht werden, dass die Mehrzahl von Segmenten der Siegelkontur mindestens vier, vorzugsweise mindestens sechs, mehr bevorzugt mindestens zwölf Segmente umfasst. Um einen guten Kompromiss zur Komplexität der Siegelvorrichtung zu finden, beträgt die Anzahl der Segmente der Mehrzahl von Segmenten bevorzugt maximal 45, mehr bevorzugt maximal 15, noch mehr bevorzugt maximal 5 Segmente. Es versteht sich, dass jede ganzzahlige Anzahl von Segmenten von der Mehrzahl von Segmenten umfasst sein kann. Bei herkömmlichen Siegelvorrichtungen wird in der Regel die gesamte Siegelkontur mittels einer Heizpatrone großvolumig erwärmt. Unter anderem aufgrund der thermischen Trägheit solcher Siegelvorrichtungen ist es nicht ohne weiteres möglich, Abweichungen von Parametern mit der notwendigen Genauigkeit zu erfassen und Störungen des Siegelvorgangs zu erkennen.

In einer bevorzugten Ausführungsform ist die Siegelkontur im Wesentlichen ringförmig ausgebildet. D. h., dass die Siegelkontur um einen zentralen Bereich, in dem die Siegelvorrichtung keine Siegelkontur aufweist, umlaufend und in sich geschlossen ausgebildet ist. Die im Wesentlichen ringförmige Siegelkontur ist folglich derart ausgebildet, dass sie bei Kontakt zur Deckfolie die Produktaufnahme im Formteil vollständig umgibt. Die im Wesentlichen "ringförmige" Gestalt der Siegelkontur ist dabei nicht auf einen Kreisring beschränkt, sondern umfasst vielmehr beliebige Umfangsformen, wie zum Beispiel Ellipsen, Polygone und andere vorzugsweise gekrümmte Formen, die die Produktaufnahme umgeben können. Die Länge der Siegelnaht bzw. der Siegelkontur entsprechen bei ringförmiger Ausbildung einem Umfang der Siegelnaht bzw. der Siegelkontur, vorzugsweise entlang einer Mittellinie derselben.

Entsprechend der Form der Siegelkontur ist die Mehrzahl von Segmenten der Siegelkontur vorzugsweise nur entlang der Siegelnaht angeordnet, wodurch die Deckfolie und das Formteil gezielt im Bereich der zu erzeugenden Siegelnaht erwärmt werden. Vorzugsweise steht nur eine der Deckfolie zugewandte Seite der Siegelkontur während Schritt a) in Kontakt mit der Deckfolie.

Die Segmente der Mehrzahl von Segmenten der Siegelkontur grenzen vorzugsweise aneinander an und sind durchgängig entlang der Siegelkontur angeordnet, sodass die Schritte a) und b) entlang der gesamten Siegelnaht erfolgen. Die Mehrzahl von Segmenten kann folglich möglichst lückenlos entlang der Siegelkontur bzw. Siegelnaht angeordnet sein.

Dass die Siegelkontur in die Mehrzahl von Segmenten eingeteilt ist, bedeutet nicht, dass die Segmente der Mehrzahl von Segmenten auf der der Deckfolie zugewandten Seite physisch/strukturell unterteilt bzw. voneinander getrennt sein müssen. Die Unterteilung der Siegelkontur in eine Mehrzahl von Segmenten kann auch "imaginär" erfolgen und beispielsweise durch die Funktion der Siegelvorrichtung bedingt sein, insbesondere auch durch weitere Komponenten, die mit der Siegelkontur in Kontakt stehen, wie sich aus der weiteren Beschreibung ergibt.

Das Verfahren kann vor Schritt a) weiterhin das Anordnen der Deckfolie auf dem Formteil umfassen, vorzugsweise durch Ansaugen der Deckfolie mittels der Siegelvorrichtung und Anordnen der Deckfolie auf dem Formteil mittels der Siegelvorrichtung. Hierzu umfasst die Siegelvorrichtung bevorzugt zumindest eine Saugöffnung, die mit einer Unterdruckquelle verbunden ist. Die zumindest eine Saugöffnung kann im zentralen Bereich der Siegelvorrichtung innerhalb der Siegelkontur ausgebildet sein.

In einer besonders bevorzugten Ausführungsform erfasst die Siegelvorrichtung in jedem Segment den Ist-Wert des für die Siegelqualität kennzeichnenden Parameters unabhängig von den anderen Segmenten der Mehrzahl von Segmenten. Zusätzlich oder alternativ kann jedes Segment der Mehrzahl von Segmenten die Deckfolie zum Siegeln gemäß Schritt a) im Wesentlichen unabhängig von den anderen Segmenten der Mehrzahl von Segmenten erwärmen. Die Segmente der Mehrzahl von Segmenten sind somit einzeln ansteuerbar.

Es ist bevorzugt, dass die Siegelvorrichtung eine Mehrzahl von Heizelementen und eine Mehrzahl von Sensorelementen umfasst, wobei jedem Segment der Mehrzahl von Segmenten jeweils ein Heizelement und ein Sensorelement zugeordnet ist. Die Betriebsdaten der Mehrzahl von Heizelementen und/oder der Mehrzahl von Sensorelementen können dann verwendet werden, um den Parameter und v.a. dessen Ist-Werte gemäß Schritt b) zu erfassen. Dadurch wird ein besonders einfaches Verfahren ermöglicht, da Elemente, die zum Siegeln der Deckfolie an das Formteil vorgesehen sind, zugleich zur Bestimmung der Qualität der Siegelnaht verwendet werden können.

Die Betriebsdaten können zum Beispiel eine elektrische Leistung, eine Stromstärke oder Spannung, einen elektrischen Widerstand oder eine Temperatur der Heizelemente und/oder Sensorelemente umfassen.

Die Heizelemente der Mehrzahl von Heizelementen sind jeweils dazu eingerichtet, ein Segment der Siegelkontur zum Siegeln gemäß Schritt a) zu erwärmen. Die Sensorelemente der Mehrzahl von Sensorelementen können zum Beispiel die Temperatur in jedem Segment erfassen.

Jeweils ein Heizelement der Mehrzahl von Heizelementen und ein Sensorelement der Mehrzahl von Sensorelementen können integral ausgebildet sein. Dies ist zum Beispiel möglich, wenn die Heizelemente als Draht oder Leiterbahn ausgebildet sind und auf diese Weise eine elektrische Widerstandsheizung bilden. Über den elektrischen Widerstand eines solchen Heizelements, der sich mit der Temperatur ändert, kann zugleich auf dessen Temperatur geschlossen werden. Das Heizelement kann folglich als Sensorelement z.B. für den Widerstand, die Temperatur oder die elektrische Leistung angesehen werden. Weitere Details zur Mehrzahl von Heizelementen und zur Mehrzahl von Sensorelementen ergeben sich aus der Beschreibung der Siegelvorrichtung hierin.

Das Erfassen des Parameters, der kennzeichnend für die Siegelqualität der Siegelnaht ist, erfolgt vorzugsweise während des Siegelvorgangs gemäß Schritt a) oder mit Abschluss des Siegelvorgangs. So liegen unmittelbar mit der Herstellung bzw. mit der Fertigstellung der Siegelnaht entsprechende Werte zur Bestimmung der Qualität der jeweiligen Siegelnaht vor. Bevorzugt wird der Ist-Wert des Parameters in allen Segmenten der Mehrzahl von Segmenten der Siegelkontur gleichzeitig erfasst.

Der Siegelvorgang gemäß Schritt a) wird maßgeblich bestimmt durch die Prozessparameter Siegeldruck, Siegeldauer und Siegeltemperatur. Für diese Prozessparameter sind in der Regel in Abhängigkeit der Materialpaarung von Formteil und Deckfolie sowie der Anforderungen an die Siegelnaht entsprechende Soll-Werte vorbestimmt. Der Siegeldruck beträgt vorzugsweise zwischen 0,1 und 1 N/mm², mehr bevorzugt zwischen 0,3 und 0,6 N/mm². Die Siegeldauer beträgt vorzugsweise zwischen 0,4 und 1,5 s, mehr bevorzugt zwischen 0,8 und 1,2 s. Die Siegeltemperatur beträgt vorzugsweise zwischen 150 und 250°C, mehr bevorzugt zwischen 180 und 230°C.

Häufig wird die Temperatur als Regelgröße verwendet, wobei die Siegeldauer und/oder Temperatur der Siegelvorrichtung angepasst wird, bis die Temperatur an der Siegelstelle der Soll-Siegeltemperatur entspricht. Die Schritte b) und c) erfolgen vorzugsweise unabhängig von und zusätzlich zu einer solchen Regelung der Prozessparameter. Für ein gutes Siegelergebnis und somit eine ausreichende Qualität der Siegelnaht ist es erforderlich, dass die Prozessparameter präzise eingestellt sind und allenfalls in einem sehr kleinen Toleranzbereich von den vorgegebenen Soll-Werten abweichen.

Der Parameter, der kennzeichnend für die Siegelqualität der Siegelnaht ist, kann beispielsweise ein Widerstand eines Heizelements, eine Temperatur in einem Segment der Mehrzahl von Segmenten bzw. eines Heizelements, oder der Energiebedarf eines Segments der Mehrzahl von Segmenten während des Siegelns gemäß Schritt a) sein.

Der Soll-Wert des Parameters, der kennzeichnend für die Siegelqualität der Siegelnaht ist, kann ein vorbestimmter Wert sein. In diesem Fall kann der Soll-Wert dem Wert des Parameters entsprechen, der bei einer fehlerfreien Versiegelung und somit ohne Störung der Siegelnaht erreicht wird. Der vorbestimmte Soll-Wert kann beispielsweise aus einer Vielzahl von vorangehenden Siegelvorgängen, aus Versuchsreihen, aus Erfahrungswerten, oder aus der Auslegung des Siegelvorgangs ermittelt werden. Der vorbestimmte Soll-Wert kann auch ein Maximalwert sein, der sich aus einer Vielzahl von Versuchen oder Siegelvorgängen ergibt.

Vorzugsweise umfasst die Siegelvorrichtung eine Steuereinrichtung und der Schritt c) wird mittels der Steuereinrichtung durchgeführt. Die Steuereinrichtung kann weiterhin eine Speichereinrichtung zum Speichern der Prozessparameter und zum Beispiel des vorbestimmten Soll-Werts des Parameters, der kennzeichnend für die Siegelqualität der Siegelnaht ist, umfassen. Schritt c) umfasst dann zunächst das Abrufen des vorbestimmten Soll-Werts des Parameters aus der Speichereinrichtung.

Anstelle eines vorbestimmten Soll-Werts des Parameters kann der Schritt c) des Verfahrens weiterhin das Ermitteln zumindest eines Vergleichswerts der Ist-Werte des Parameters zumindest eines Teils der Mehrzahl von Segmenten umfassen, wobei der Soll-Wert des Parameters dann dem Vergleichswert entspricht. Zum Beispiel kann als Vergleichswert der Ist-Wert des Parameters eines anderen Segments der Mehrzahl von Segmenten, vorzugsweise eines angrenzenden Segments oder eines bezüglich der Siegelkontur symmetrisch angeordneten Segments herangezogen werden. Der Vergleichswert kann aber auch ein Mittelwert des Ist-Werts eines Teils der oder aller anderen Segmente der Mehrzahl von Segmenten sein.

Ist der Parameter, der kennzeichnend für die Siegelqualität der Siegelnaht ist, der Widerstand eines Heizelements und liegt dieser zum Beispiel über oder unter einem Soll-Wert oder weicht um mehr als einen vordefinierten Grenzwert vom Widerstand (Vergleichswert) eines oder mehrerer anderer Heizelemente der Mehrzahl von Heizelementen ab, kann daraus auf einen Defekt des Heizelements geschlossen werden. Ein defektes Heizelement hat zur Folge, dass die Siegelkontur in dem Segment, das dem defekten Heizelement zugeordnet ist, nicht ordnungsgemäß erwärmt wird. Sowohl eine zu hohe als auch eine zu niedrige Erwärmung der Deckfolie und des Formteils wirken sich nachteilig auf die Qualität der Siegelnaht aus.

Ist der Parameter, der kennzeichnend für die Siegelqualität der Siegelnaht ist, die Temperatur oder der Temperaturverlauf, erfasst die Siegelvorrichtung gemäß Schritt b) die Temperatur bzw. den Temperaturverlauf in jedem Segment der Mehrzahl von Segmenten entlang der Siegelnaht. Liegt die Temperatur in einem Segment, insbesondere zum Ende des Siegelvorgangs, über oder unter einem Soll-Wert oder weicht um mehr als einen vordefinierten Grenzwert von der Temperatur (Vergleichswert) eines oder mehrerer anderer Segmente der Mehrzahl von Segmenten ab, wird in diesem Segment die vorbestimmte Soll-Siegeltemperatur nicht eingehalten. Ebenso kann aus einem Temperaturverlauf, der von einem vorgegebenen Verlauf oder vom Verlauf zumindest eines anderen Segments abweicht, auf eine fehlerhafte Erwärmung des jeweiligen Segments bzw. Störung der Siegelfläche geschlossen werden. Sowohl eine zu hohe als auch eine zu niedrige Erwärmung der Deckfolie und des Formteils wirken sich nachteilig auf die Qualität der Siegelnaht aus.

In dem Fall, in dem der Parameter, der kennzeichnend für die Siegelqualität der Siegelnaht ist, der Energiebedarf eines Segments der Mehrzahl von Segmenten während des Siegelns gemäß Schritt a) ist, erfasst die Siegelvorrichtung gemäß Schritt b) den Energiebedarf für jedes Segment der Mehrzahl von Segmenten entlang der Siegelnaht. Zum Beispiel ist der Energiebedarf erforderlich, um im jeweiligen Segment eine vorgegebene (Soll-) Siegeltemperatur zu erreichen. Der erforderliche Energiebedarf lässt sich zum Beispiel aus der Leistungsaufnahme jedes Heizelements der Mehrzahl von Heizelementen während des Siegelvorgangs gemäß Schritt a) ermitteln, insbesondere aus der elektrischen Leistung des Heizelements und der Siegeldauer. Weicht der Energiebedarf eines Segments von einem Soll-Wert oder um einen vordefinierten Grenzwert von dem Energiebedarf (Vergleichswert) eines oder mehrerer anderer Segmente der Mehrzahl von Segmenten ab, lässt sich daraus schließen, dass im jeweiligen Segment eine ungewünscht hohe Leistungsabgabe erfolgt. Dies kann beispielsweise durch eine Verunreinigung im Siegelbereich bedingt sein, die zusätzliche Wärme und somit Energie aufnimmt.

Schritt c2) umfasst das Feststellen einer Abweichung zwischen dem Ist-Wert und dem Soll-Wert des Parameters für jedes Segment der Mehrzahl von Segmenten. Das Feststellen der Abweichung kann das Abziehen des Soll-Werts vom Ist-Wert umfassen oder umgekehrt. Ist der Betrag der Abweichung gleich null, entspricht der Ist-Wert dem Soll-Wert. Der Siegelvorgang wurde in diesem Fall ordnungsgemäß ausgeführt und es ist davon auszugehen, dass die Qualität der Siegelnaht in Ordnung ist. Ist der Betrag der Abweichung größer als null, könnte ein Fehler vorliegen und die Qualität der Siegelnaht nicht in Ordnung sein. Da der Siegelvorgang gewissen Schwankungen unterliegen kann, ist es bevorzugt, einen Toleranzbereich für den Soll-Wert des Parameters bzw. für die Abweichung zu definieren. Liegt der Ist-Wert außerhalb des Toleranzbereichs des Soll-Werts oder ist die festgestellte Abweichung größer als eine tolerierte Abweichung, wird von einer fehlerhaften Siegelnaht ausgegangen.

Das Verfahren kann nach Schritt c) weiterhin das Bestimmen einer Qualität der Siegelnaht in Abhängigkeit von der gemäß Schritt c) erkannten Störung umfassen.

Schritt c2) kann weiterhin das Feststellen eines Grads der Abweichung umfassen. Das Verfahren kann dann nach Schritt c) das Einordnen der Verpackung in eine Kategorie aus zumindest einer ersten und einer zweiten Kategorie in Abhängigkeit vom festgestellten Grad der Abweichung umfassen, wobei jede Kategorie kennzeichnend für eine bestimmte Qualität der Siegelnaht ist. Zum Beispiel entspricht die erste Kategorie dem Qualitätsmerkmal "in Ordnung" und die zweite Kategorie dem Qualitätsmerkmal "nicht in Ordnung". Der Grad der Abweichung kann ein Betrag der Abweichung oder ein Verhältnis der Abweichung zu vorbestimmten Grenzwerten sein. Über den Grad der Abweichung lässt sich die Qualität der Siegelnaht und somit der Verpackungen quantifizieren.

Es ist auch denkbar, in Abhängigkeit vom Grad der Abweichung weitere Kategorien zu definieren, insbesondere für Siegelnähte die fehlerhaft sind. Beispielsweise können Verpackungen der zweiten Kategorie eine Siegelnaht aufweisen, die durchgängig aber weniger stark ausgebildet ist. Die Verpackungen der zweiten Kategorie sind dann zwar grundsätzlich fehlerhaft, können aber noch verwendet werden. Verpackungen einer dritten Kategorie können dann zum Beispiel eine Siegelnaht aufweisen, die nicht durchgängig ist. Die Verpackungen der dritten Kategorie sind folglich fehlerhaft und können auch nicht mehr verwendet werden. Es versteht sich, dass sich eine beliebige Anzahl von Kategorien definieren lässt.

In einer Ausführungsform kann das Verfahren nach dem Einordnen der Verpackung in eine Kategorie weiterhin das Weiterverarbeiten der Verpackung in Abhängigkeit von der Kategorie, in die die Verpackung eingeordnet wurde, umfassen, wobei sich das Weiterverarbeiten für jede Kategorie unterscheidet. In Anlehnung an das zuvor beschriebene Ausführungsbeispiel kann das Weiterverarbeiten von Verpackungen der ersten Kategorie das Fertigstellen der Verpackung und das Verpacken der Verpackung zusammen mit weiteren Verpackungen der ersten Kategorie in eine Umverpackung umfassen. Das Weiterverarbeiten von Verpackungen der zweiten Kategorie kann das Ausschleusen der Verpackung und das Kennzeichnen der Verpackung als mangelhaft oder beispielsweise mit einem früheren Mindesthaltbarkeitsdatum umfassen. Gegebenenfalls können auch mehrere Verpackungen der zweiten Kategorie in eine Umverpackung verpackt werden. Das Weiterverarbeiten von Verpackungen der dritten Kategorie kann das Ausschleusen der Verpackungen und das Entsorgen der Verpackungen umfassen.

Eine erfindungsgemäße Siegelvorrichtung zum Siegeln einer Deckfolie an ein Formteil mit zumindest einer Produktaufnahme umfasst eine Siegelkontur zum Erzeugen der Siegelnaht, wobei die Siegelkontur in eine Mehrzahl von Segmenten eingeteilt ist, eine Mehrzahl von Heizelementen und eine Mehrzahl von Sensorelementen, wobei jedem Segment der Mehrzahl von Segmenten jeweils ein Heizelement und ein Sensorelement zugeordnet ist, sowie eine Steuereinrichtung. Die Siegelvorrichtung ist dazu eingerichtet, mittels der Mehrzahl von Sensorelementen und/oder der Mehrzahl von Heizelementen in jedem Segment der Mehrzahl von Segmenten jeweils einen Parameter zu erfassen, der kennzeichnend für eine Siegelqualität der Siegelnaht ist. Die Steuereinrichtung ist dazu eingerichtet ist, basierend dem Parameter eine Störung des Siegelns, insbesondere der Siegelnaht oder der Siegelvorrichtung, zu erkennen.

Auf diese Art und Weise wird eine Siegelvorrichtung bereitgestellt, mittels derer sich unmittelbar im Anschluss an das Siegeln Aussagen über die Qualität der erzeugten Siegelnaht treffen lassen. Zusätzliche Vorrichtungen, die aufgrund ihres Aufbaus, ihres Antriebs und ihrer Steuerung die Komplexität und Kosten einer Verpackungsmaschine erhöhen, sind dazu nicht erforderlich. Durch die Einteilung der Siegelkontur in eine Mehrzahl von Segmenten, kann für jedes Segment erkannt werden, ob die Siegelnaht dort ordnungsgemäß ausgebildet wird. Auch geringe Störungen, wie zum Beispiel durch kleine Verunreinigungen wie Staub oder Tröpfchen, können dadurch zuverlässig erkannt werden. Die Fehlererkennung erfolgt somit mit einer großen Genauigkeit und hohen Auflösung.

Vorzugsweise ist die erfindungsgemäße Siegelvorrichtung zum Ausführen des erfindungsgemäßen Verfahrens ausgebildet. Die hierin in Zusammenhang mit dem erfindungsgemäßen Verfahren beschriebenen Merkmale lassen sich daher ohne weiteres auf die erfindungsgemäße Siegelvorrichtung übertragen und umgekehrt.

Die Steuereinrichtung kann dazu eingerichtet sein, die Störung des Siegelns basierend auf Betriebsparametern der Mehrzahl von Heiz- und/oder Sensorelementen zu erkennen, wie bereits beschrieben.

In einer bevorzugten Ausführungsform umfasst die Siegelvorrichtung weiterhin ein Trägersubstrat, das insbesondere aus Keramik gebildet ist. Auf einer der Deckfolie zugewandten Seite des Trägersubstrats können die Mehrzahl von Heizelementen und die Mehrzahl von Sensorelementen vorgesehen sein, wobei wahlweise jeweils ein Heizelement und ein Sensorelement integral ausgebildet sein können. Die Mehrzahl von Heiz- und/oder Sensorelementen können durch Drähte oder Leiterbahnen gebildet sein, die auf das Trägersubstrat aufgebracht sind. Leiterbahnen können direkt auf das Trägersubstrat aufgedampft oder aufgedruckt sein.

Zum Schutz der Mehrzahl von Heizelementen und der Mehrzahl von Sensorelementen kann eine Schutzschicht vorgesehen sein, die die Heizelemente und die Sensorelement zur Deckfolie hin bedeckt. Die Schutzschicht kann eine dünne Platte sein, die die Heiz- und Sensorelemente überdeckt. Die Schutzschicht kann aber auch eine Abdeckschicht auf dem Trägersubstrat sein, in die die Heiz- und Sensorelemente eingelassen sind. Vorzugszuweise bildet zumindest die Schutzschicht die Siegelkontur. Alternativ kann auch das Trägersubstrat, das mit den Heiz- und Sensorelementen ausgestattet ist, oder eine separate Siegelkomponente, die auf dem Trägersubstrat oder der Schutzschicht angeordnet ist, die Siegelkontur bilden.

Weitere Merkmale und Vorteile der vorliegenden Erfindung ergeben sich aus der nachfolgenden Beschreibung unter Bezugnahme auf die beigefügten Zeichnungen.
- Fig. 1: zeigt eine Ausführungsform einer erfindungsgemäßen Siegelvorrichtung in einer perspektivischen Ansicht.
- Fig. 2: zeigt einen Teil der Siegelvorrichtung nach Fig. 1 schematisch in einer Schnittansicht.
- Fig. 3: zeigt einen Teil der Siegelvorrichtung nach Fig. 1 schematisch in einer Draufsicht.
- Fig. 4a, b: zeigen exemplarisch eine Verpackung in einer perspektivischen Ansicht mit und ohne Deckfolie.
- Fig. 5 und 6: zeigen ein Formteil der Verpackung nach Fig. 4 in einer Draufsicht.
- Fig. 7a-c: sind Ablaufdiagramme eines erfindungsgemäßen Verfahrens.

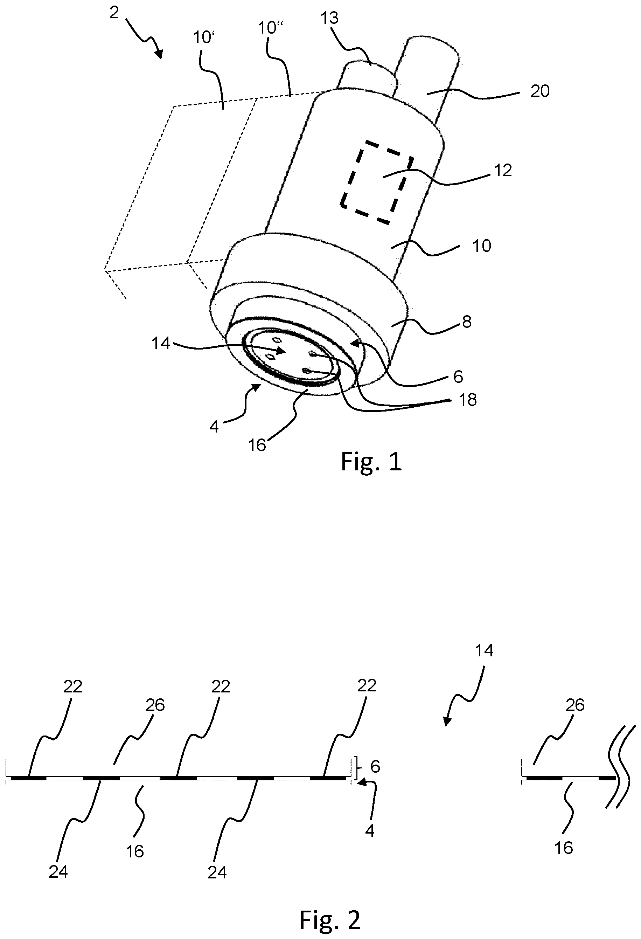

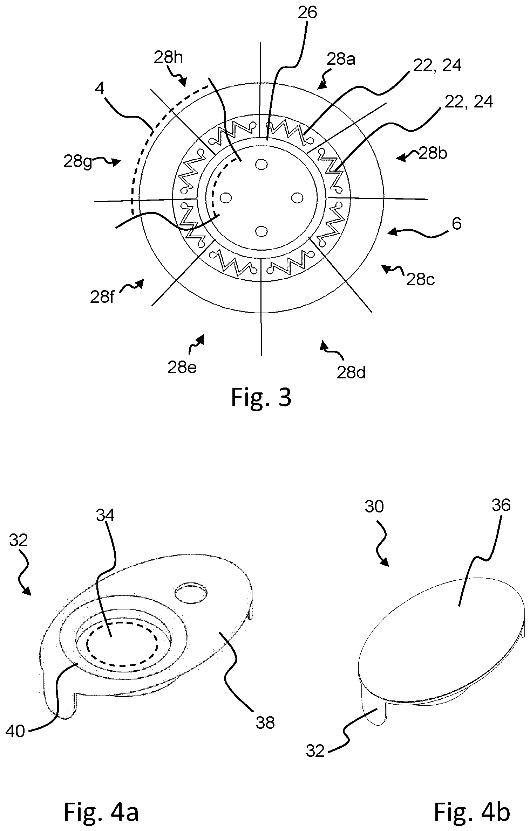

In Fig. 1 ist eine Ausführungsform einer erfindungsgemäßen Siegelvorrichtung 2 in einer perspektivischen Ansicht dargestellt. Die Siegelvorrichtung 2 weist eine Siegelkontur 4 auf, die dazu ausgebildet ist, mit einer Deckfolie einer zu versiegelnden Verpackung (siehe Fig. 4) in Kontakt zu treten. Zum thermischen Siegeln der Deckfolie an ein Formteil der zu versiegelnden Verpackung umfasst die Siegelvorrichtung 2 eine Heizeinrichtung 6, die die Siegelkontur 4 erwärmt und dazu in thermisch leitendem Kontakt mit der Siegelkontur 4 steht. Die Heizeinrichtung 6 kann mittels eines Isolationskörpers 8 der Siegelvorrichtung 2 mit einem Gehäuse 10 der Siegelvorrichtung 2 verbunden sein. Der Isolationskörper 8 isoliert das Gehäuse 10, die darin aufgenommenen Komponenten, sowie die übrige Siegelvorrichtung 2 thermisch von der Heizeinrichtung 6, sodass die von dieser generierte Wärme gezielt in die Siegelkontur 4 geleitet wird.

Im Gehäuse 10 kann beispielsweise eine Steuereinrichtung 12 zum Steuern und Regeln der Siegelvorrichtung 2 aufgenommen sein. Die Steuereinrichtung 12 ist mit der Heizeinrichtung 6 verbunden. Die Steuereinrichtung 12 und die Heizeinrichtung 6 können über einen Anschluss 13 mit Strom und gegebenenfalls weiteren Steuersignalen versorgt werden. Es ist auch denkbar, dass die Steuereinrichtung 12 außerhalb des Gehäuses 10 vorgesehen ist und Steuersignale über eine entsprechende Leitung am Anschluss 13 an die Heizeinrichtung 6 sendet.

Wie in Fig. 1 dargestellt, ist die Siegelkontur 4 im Wesentlichen ringförmig ausgebildet und umschließt einen zentralen Bereich 14, in dem die Siegelvorrichtung 2 keine Siegelkontur 4 aufweist. Die Siegelkontur 4 weist vorzugsweise eine Form auf, die im Wesentlichen mit der Form einer zu erzeugenden Siegelnaht korrespondiert (siehe Fig. 3 bis 6), wodurch die Wärmeeinbringung durch die Siegelvorrichtung 2 gezielt auf den Bereich der zu erzeugenden Siegelnaht gerichtet ist. Die Siegelkontur 4 kann gegenüber anderen Komponenten und Bereichen, insbesondere gegenüber dem zentralen Bereich 14, hervorragen. Dies wird in der dargestellten Ausführungsform dadurch erreicht, dass die Siegelkontur 4 eine Schutzschicht 16 umfasst, die die Heizeinrichtung 6 schützt und aus einem thermisch gut leitenden Material gebildet ist. Die Siegelkontur 4 kann aber auch integral mit der Heizeinrichtung 6 ausgebildet sein, indem diese ein entsprechendes Profil aufweist.

Die Siegelvorrichtung 2 kann weiterhin zumindest eine Saugöffnung 18 zum Ansaugen der Deckfolie und Anordnen der Deckfolie auf dem Formteil mittels der Siegelvorrichtung 2 umfassen. Hier umfasst die Siegelvorrichtung 2 eine Mehrzahl solcher Saugöffnungen 18, die über einen entsprechenden Anschluss 20 am Gehäuse 10 mit einer Unterdruckquelle, wie zum Beispiel einer Vakuumpumpe, verbunden sind und innerhalb der Siegelkontur 4 im zentralen Bereich 14 der Siegelvorrichtung 2 angeordnet sind.

Die Siegelvorrichtung 2 kann auch zum Siegeln einer Mehrzahl von Verpackungen bzw. einer Verpackung mit einer Mehrzahl von Produktaufnahmen und Siegelnähten ausgebildet sein. In diesem Fall umfasst die Siegelvorrichtung eine der Anzahl von Produktaufnahmen entsprechende Mehrzahl von Siegelkonturen 4, wie in Fig. 1 beispielhaft durch die gestrichelt gekennzeichneten Gehäuse 10' und 10" angedeutet ist, an denen jeweils eine analog zur zuvor beschriebenen Siegelvorrichtung 2 ausgebildete Siegelkontur und Heizeinrichtung vorgesehen sind.

In Fig. 2 und Fig. 3 sind jeweils Details der Siegelvorrichtung 2, insbesondere der Heizeinrichtung 6 dargestellt. Die Siegelvorrichtung 2 umfasst eine Mehrzahl von Heizelementen 22 zum Erwärmen der Siegelkontur 4, wobei die Heizelemente 22 wesentliche Bestandteile der Heizeinrichtung 6 bilden. Weiterhin umfasst die Siegelvorrichtung 2 eine Mehrzahl von Sensorelementen 24, die vorzugsweise zum Erfassen der Temperatur der Heizelemente 22 und/oder der Siegelkontur 4 eingerichtet sind. Die Mehrzahl von Heizelementen 22 und die Mehrzahl von Sensorelementen 24 können als Leiterbahnen ausgebildet sein, die auf ein Trägersubstrat 26 aufgebracht sind. Zum Beispiel sind die Leiterbahnen auf eine der Deckfolie zugewandte Seite bzw. eine vom Isolationskörper 8 abgewandte Seite des Trägersubstrats 26 aufgedruckt. Das Trägersubstrat 26 ist vorzugsweise aus Keramik gebildet. Dadurch wird eine sehr dynamisch und lokal gezielt regelbare Heizeinrichtung 6 bereitgestellt. Die Schutzschicht 16 kann die Mehrzahl von Heizelementen 22 und die Mehrzahl von Sensorelementen 24 zu deren Schutz vor Verschleiß überdecken, wie in Fig. 2 dargestellt. In der Draufsicht nach Fig. 3 ist die Siegelkontur 4 bzw. Schutzschicht 16 zur Veranschaulichung der Heizelemente 22 nur teilweise gestrichelt angedeutet.

In der Ausführungsform nach Fig. 2 sind die Heizelemente 22 der Mehrzahl von Heizelementen 22 getrennt von den Sensorelementen 24 der Mehrzahl von Sensorelementen 24 ausgebildet, z.B. durch separate Drähte, Leiterbahnen, Sensoren.

In der Ausführungsform nach Fig. 3 sind jeweils ein Heizelement 22 und ein Sensorelement 24 integral ausgebildet, hier zum Beispiel durch eine einzige Leiterbahn. Dies kann beispielsweise dadurch erreicht werden, dass die Mehrzahl von Heizelementen 22 elektrische Widerstandsheizungen sind. Deren Widerstand ändert sich in Abhängigkeit von der Temperatur, die sich somit über den Widerstand des jeweiligen Heizelements 22 erfassen lässt. Sofern nicht anders beschrieben, können beide Ausführungsformen beliebig eingesetzt und mit allen anderen hierin beschriebenen Merkmalen der Siegelvorrichtung 2 kombiniert werden.

Wie sich aus einer Zusammenschau der Figuren 1 und 3 ergibt, ist die Siegelkontur 4 in eine Mehrzahl von Segmenten 28 eingeteilt. Im dargestellten Ausführungsbeispiel umfasst die Mehrzahl von Segmenten 28 acht Segmente 28a, 28b, 28c, 28d, 28e, 28f, 28g, 28h. Die Siegelkontur 4 muss nicht strukturell in Segmente 28a-h unterteilt sein. Zum Beispiel kann die Siegelkontur 4 auch, wie dargestellt, korrespondierend zur Anordnung der Mehrzahl von Heizelementen 22 "imaginär" in die Segmente 28a-h eingeteilt sein, sodass jedes Segment 28a-h ein Heizelement 22 und vorzugsweise ein Sensorelement 24 umfasst. Die Segmente 28a-h grenzen vorzugsweise aneinander an und sind durchgängig entlang der Siegelkontur 4 angeordnet. Jedes Heizelement 22 erwärmt das jeweilige, ihm zugeordnete Segment 28a-h der Siegelkontur 4 und jedes Sensorelement 24 überwacht das jeweilige, ihm zugeordnete Segment 28a-h der Siegelkontur 4, insbesondere dessen Temperatur. Dadurch ist jedes Segment 28a-h der Mehrzahl von Segmenten 28 einzeln ansteuerbar und überwachbar.

In Fig. 4a, b ist eine Verpackungen 30, die mittels des erfindungsgemäßen Verfahrens und der erfindungsgemäßen Siegelvorrichtung 2 herstellbar ist, in einer perspektivischen Ansicht dargestellt. Die Verpackung 30 umfasst ein Formteil 32, in dem eine Produktaufnahme 34 ausgebildet ist, und eine Deckfolie 36, die an das Formteil 32 gesiegelt ist. Zur besseren Veranschaulichung ist die Deckfolie 32 nur in Fig. 4b gezeigt, während sie in Fig. 4a zur Darstellung darunter liegender Merkmale ausgeblendet ist. Das Formteil 32 kann ein Spritzgussteil sein, wie dies beispielsweise für die Verpackung von Kontaktlinsen verwendet wird, oder kann eine Blisterpackung sein, wie sie beispielsweise für die Verpackung von pharmazeutischen Produkten verwendet wird. Die Produktaufnahme 34 ist vorzugsweise als Napf bzw. Hof im Formteil 32 ausgebildet und enthält vorzugsweise ein Produkt und/oder ein Fluid (nicht dargestellt). Bevorzugt weist das Formteil 32 einen Flansch 38 auf, der die Produktaufnahme 34 umgibt und die Deckfolie 36 kontaktiert. Die Deckfolie 36 ist entlang einer Siegelnaht 40, die die Produktaufnahme 34 umgibt, an das Formteil 32 gesiegelt. Hierzu kann der Flansch 38 eine Siegelfläche bereitstellen, auf der die Siegelnaht 40 ausgebildet ist.

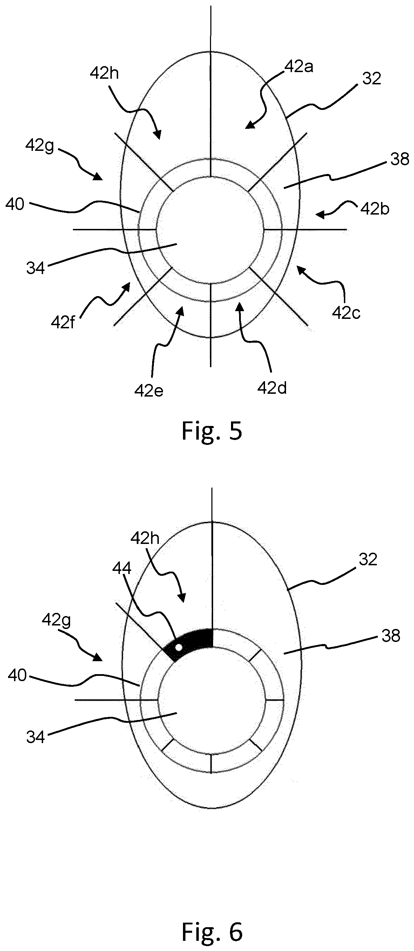

In Fig. 5 und 6 ist das Formteil 32 der Verpackung 30 in einer Draufsicht dargestellt, wobei zur Veranschaulichung der Siegelnaht 40 um die Produktaufnahme 34 die Deckfolie 36, die entlang der Siegelnaht 40 an das Formteil 32 gesiegelt ist, nicht dargestellt ist. Hier ist besonders gut zu erkennen, dass die Siegelnaht 40 die Produktaufnahme 34 vollständig umgibt, um die Produktaufnahme 34 dicht zu verschließen. Wie sich aus einer Zusammenschau der Figuren 3 und 5 ergibt, weisen die Siegelnaht 40 und die Siegelkontur 4 der Siegelvorrichtung 2 bevorzugt eine korrespondierende Form auf, sodass der Siegelbereich gezielt erwärmt und die Siegelnaht 40 um die Produktaufnahme 34 herum ausgebildet wird.

Zum besseren Verständnis ist die Siegelnaht 40 in Fig. 5 und Fig. 6 in eine Mehrzahl von Abschnitten 42a-h eingeteilt, die in ihrer Ausprägung vorzugsweise jeweils einem Segment 28a-h der Mehrzahl von Segmenten 28 entsprechen. Jedem Segment 28a-h ist folglich ein Abschnitt 42a-h der Siegelnaht 40 zugeordnet.

In Fig. 6 ist beispielhaft für eine mögliche Störung und einen daraus resultierenden Fehler der Siegelnaht 40 eine Verunreinigung 44 im Bereich der Siegelnaht 40 (auch Siegelbereich oder Siegelfläche) dargestellt. Hier befindet sich die Verunreinigung 44 im Abschnitt 42h der zu erzeugenden Siegelnaht 40, die dem Segment 28h der Mehrzahl von Segmenten 28 zugeordnet werden kann. Die Verunreinigung 44 kann beispielsweise aus dem Füllprozess der Produktaufnahme 34 resultieren, wenn das Produkt oder ein Teil davon nicht vollständig in der Produktaufnahme 34 aufgenommen wird oder Tropfen eines in die Produktaufnahme 34 zu füllenden Fluids auf die Siegelfläche gelangen. Die Verunreinigung 44 kann dazu führen, dass die Deckfolie 36 an der Stelle der Verunreinigung 44 nicht ordnungsgemäß an das Formteil 32 gesiegelt wird und folglich an dieser Stelle keine oder eine nur unvollständige Siegelnaht 40 ausgebildet ist. Ein solcher Fehler der Siegelnaht 40 ist vor allem bei medizinischen und pharmazeutischen Produkten nicht akzeptabel und muss zuverlässig erkannt werden.

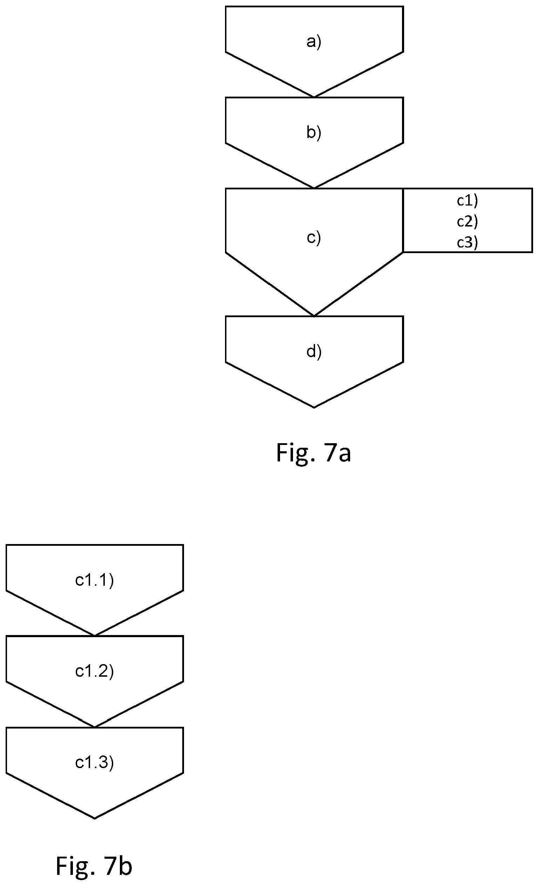

Das erfindungsgemäße Verfahren zum Herstellen und Prüfen der Verpackung 30 eignet sich besonders gut zum Erkennen von Störungen des Siegelprozesses, die zu einer fehlerhaften Siegelnaht führen können, und ist nachfolgend unter Bezugnahme auf Fig. 7a-c be- schrieben. Es versteht sich, dass die Schritte nicht nacheinander ausgeführt werden müssen, sondern zum Teil auch gleichzeitig erfolgen können, wie sich aus der Beschreibung ergibt.

Das Verfahren umfasst zunächst das Siegeln der Deckfolie 36 an das Formteil 32 entlang der Siegelnaht 40, die die zumindest eine Produktaufnahme 34 umgibt, mittels der Siegelvorrichtung 2 (Schritt a)). Die Siegelvorrichtung 2 weist die Siegelkontur 4 auf, die in die Mehrzahl von Segmenten 28 eingeteilt ist. Bevorzugt ist die Siegelvorrichtung 2 gemäß der unter Bezugnahme auf Fig. 1-3 beschriebenen Ausführungsformen ausgebildet. Das Siegeln kann thermisch erfolgen, sodass die hergestellte Verpackung 30 eine heißversiegelte Kunststoffverpackung ist, wie zum Beispiel eine Blisterpackung für Pharmazeutika oder eine Kontaktlinsenverpackung. Das Siegeln erfolgt vorzugsweise unter Aufbringung von Druck und Wärme auf die Deckfolie 36 und das Formteil 32 im Bereich der zu erzeugenden Siegelnaht 40, wie dem Fachmann zum Herstellen derartiger Verpackungen bekannt ist.

Weiterhin umfasst das Verfahren das Erfassen eines Parameters P, der kennzeichnend für eine Siegelqualität der Siegelnaht 40 ist, in jedem Segment 28a-h der Mehrzahl von Segmenten 28 entlang der Siegelnaht 40 durch die Siegelvorrichtung 2 (Schritt b)). Der Parameter P kann beispielsweise ein elektrischer Widerstand R eines Heiz- und/oder Sensorelements 22, 24, eine Temperatur T eines Heiz- und/oder Sensorelements 22, 24 bzw. des jeweiligen Segments 28a-h, oder ein Energiebedarf E eines Segments 28a-h während des Siegelns gemäß Schritt a) sein. Über diese aber auch über andere Parameter P lassen sich Informationen über die Siegelqualität der Siegelnaht 40 gewinnen, wie eingangs beschrieben. Um den Parameter P zu erfassen, können Betriebsdaten der Mehrzahl von Heizelementen 22 und/oder der Mehrzahl von Sensorelementen 24 verwendet werden. Das Erfassen des Parameters P kann mittels der Mehrzahl von Heizelementen 22 und/oder der Mehrzahl von Sensorelementen 24 und der Steuereinrichtung 12 erfolgen. Besonders bevorzugt wird in Schritt b) ein Ist-Wert Pᵢₛₜ des Parameters P erfasst.

Das Erkennen einer Störung des Siegelns gemäß Schritt a), insbesondere einer Störung der Siegelnaht 40 oder der Siegelvorrichtung 2, basiert schließlich auf dem gemäß Schritt b) in jedem Segment 28a-h der Mehrzahl von Segmenten 28 erfassten Parameter P (Schritt c)). Eine Störung der Siegelnaht 40 kann beispielsweise durch die Verunreinigung 44 auf der Siegelfläche bedingt sein (siehe Fig. 6). Eine Störung der Siegelvorrichtung 2 kann zum Beispiel durch ein defektes Heizelement 22 bedingt sein.

So kann möglichst einfach, schnell und genau festgestellt werden ob der Siegelvorgang gemäß Schritt a) in jedem Segment 28a-h der Siegelkontur 4 bzw. in jedem Abschnitt 42a-h der Siegelnaht 40 ordnungsgemäß ausgeführt wurde und die Siegelnaht 40 die erforderlichen Qualitätsansprüche erfüllen kann. Auf einen Fehler, der aus einer solchen Störung resultiert, kann unmittelbar im Herstellungsprozess reagiert werden.

Das Erkennen der Störung des Siegelns umfasst in einer bevorzugten Ausführungsform das Vergleichen des erfassten Ist-Werts Pᵢₛₜ des Parameters P jedes Segments 28a-h der Mehrzahl von Segmenten 28 mit einem Soll-Wert Pₛₒₗₗ des Parameters P für das jeweilige Segment 28a-h (Schritt c1)) und das Feststellen für jedes Segment 28a-h der Mehrzahl von Segmenten 28, ob eine Abweichung ΔP zwischen dem Ist-Wert Pᵢₛₜ und dem Soll-Wert Pₛₒₗₗ des Parameters P vorliegt (Schritt c2)). Die Störung des Siegelns gemäß Schritt a) basiert dann auf einer nach Schritt c2) festgestellten Abweichung ΔP zwischen dem Ist-Wert Pᵢₛₜ und dem Soll-Wert Pₛₒₗₗ des Parameters P (Schritt c3)). Liegt keine Abweichung vor, kann von einem ordnungsgemäßen Siegelvorgang ausgegangen werden.

Der Soll-Wert Pₛₒₗₗ kann ein vorbestimmter Wert sein, der von der Steuereinrichtung 12 abgerufen und für die Schritte c1) und c2) verwendet wird. Wie in Fig. 7b dargestellt, kann der Schritt c1) alternativ das Ermitteln eines Vergleichswerts V aus den Ist-Werten Pᵢₛₜ des Parameters P zumindest eines Teils der Mehrzahl von Segmenten 28 (Schritt c1.1)) und das Festlegen des Vergleichswerts V als Soll-Wert Pₛₒₗₗ (Schritt c1.2)) umfassen, der dann in Schritt c1.3) mit dem Ist-Wert Pᵢₛₜ eines Segments verglichen wird.

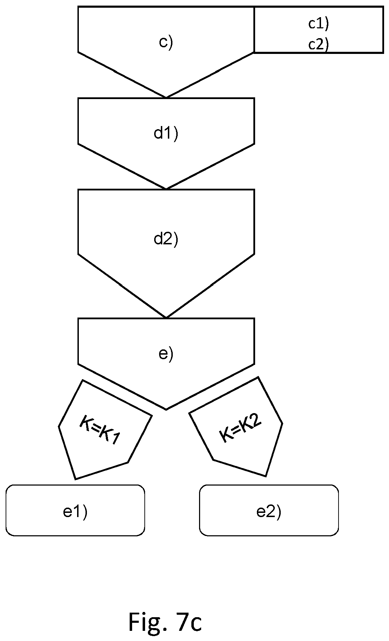

Das Verfahren kann weiterhin das Bestimmen einer Qualität Q der Siegelnaht 40 in Abhängigkeit von der gemäß Schritt c) erkannten Störung umfassen (Schritt d)). Wie in Fig. 7c gezeigt, ist es bevorzugt, dass Schritt c2) das Feststellen eines Grads der Abweichung ΔP und das Verfahren nach Schritt c) das Einordnen der Verpackung 30 in eine Kategorie K aus zumindest einer ersten Kategorie K1 und einer zweiten Kategorie K2 in Abhängigkeit vom festgestellten Grad der Abweichung ΔP umfasst (Schritt d2)). Jede Kategorie K ist dabei einer bestimmten Qualität Q der Siegelnaht 40 zugeordnet (Schritt d1)), wie eingangs beschrieben. So kann die Verpackung 30 zum Beispiel in die erste Kategorie K1 "in Ordnung", in die zweite Kategorie K2 "nicht in Ordnung-verwendbar" oder in eine dritte Kategorie K3 "nicht in Ordnung-nicht verwendbar" eingeordnet werden. Es versteht sich, dass eine Kategorisierung auch vorgenommen werden kann, wenn kein Grad der Abweichung bestimmt wird, sondern nur das Vorhandensein einer Abweichung festgestellt wird (Schritt c2)). Zum Beispiel entspricht die erste Kategorie K1 dann dem Merkmal "keine Abweichung" und die zweite Kategorie K2 dem Merkmal "Abweichung".

Schließlich kann die Verpackung 30 nach dem Einordnen in eine Kategorie K in Abhängigkeit von der Kategorie K weiterverarbeitet werden (Schritt e)), wobei sich das Weiterverarbeiten gemäß Schritt e) für jede Kategorie K unterscheidet. Gemäß der Ausführungsform nach Fig. 7c können beispielsweise Verpackungen 30 der ersten Kategorie K1 in eine Umverpackung verpackt werden (Schritt e1)), während Verpackungen 30 der zweiten Kategorie K2 und gegebenenfalls der dritten Kategorie K3 aus dem Prozess ausgeschleust (Schritt e2)) und separat weiterverarbeitet oder vernichtet werden.

Weitere Ausführungsformen der erfindungsgemäßen Siegelvorrichtung und des erfindungsgemäßen Verfahrens sind dem Fachmann basierend auf der hierin enthaltenen detaillierten Beschreibung von Ausführungsformen ersichtlich.

## Patentansprüche

1. Verfahren zum Herstellen und Prüfen einer Verpackung (30), insbesondere einer heißversiegelten Kunststoffverpackung, die zumindest eine mittels einer Deckfolie (36) verschlossene Produktaufnahme (34) eines Formteils (32) umfasst, wobei das Verfahren die folgenden Schritte umfasst:
a) Siegeln der Deckfolie (36) an das Formteil (32) entlang einer Siegelnaht (40), die die zumindest eine Produktaufnahme (34) umgibt, mittels einer Siegelvorrichtung (2), die eine Siegelkontur (4) aufweist, die in eine Mehrzahl von Segmenten (28) eingeteilt ist, und
b) Erfassen eines Parameters (P), der kennzeichnend für eine Siegelqualität der Siegelnaht (40) ist, in jedem Segment (28a-h) der Mehrzahl von Segmenten (28) entlang der Siegelnaht (40) durch die Siegelvorrichtung (2),
**dadurch gekennzeichnet, dass** das Verfahren weiterhin den Schritt umfasst:
c) Erkennen einer Störung des Siegelns, insbesondere der Siegelnaht (40) oder der Siegelvorrichtung (2), gemäß Schritt a) basierend auf dem gemäß Schritt b) in jedem Segment (28a-h) der Mehrzahl von Segmenten (28) erfassten Parameter (P).

2. Verfahren nach Anspruch 1, **dadurch gekennzeichnet, dass** Schritt b) das Erfassen eines Ist-Werts (Pᵢₛₜ) des Parameters (P) in jedem Segment (28a-h) der Mehrzahl von Segmenten (28) umfasst, und dass Schritt c) umfasst:
c1) Vergleichen des erfassten Ist-Werts (Pᵢₛₜ) des Parameters (P) jedes Segments (28a-h) der Mehrzahl von Segmenten (28) mit einem Soll-Wert (Pₛₒₗₗ) des Parameters (P) für das jeweilige Segment (28a-h);
c2) Feststellen für jedes Segment (28a-h) der Mehrzahl von Segmenten (28), ob eine Abweichung (ΔP) zwischen dem Ist-Wert (Pᵢₛₜ) und dem Soll-Wert (Pₛₒₗₗ) des Parameters (P) vorliegt,
c3) Erkennen der Störung des Siegelns gemäß Schritt a) basierend auf einer nach Schritt c2) festgestellten Abweichung (ΔP) zwischen dem Ist-Wert (Pᵢₛₜ) und dem Soll-Wert (Pₛₒₗₗ) des Parameters (P).

3. Verfahren nach Anspruch 1 oder 2, **dadurch gekennzeichnet, dass** die Siegelnaht (40) um die Produktaufnahme (34) eine Länge aufweist, die zwischen 10 mm und 1200 mm, vorzugsweise zwischen 25 mm und 600 mm, mehr bevorzugt zwischen 50 mm und 150 mm beträgt.

4. Verfahren nach einem der vorangehenden Ansprüche, **dadurch gekennzeichnet, dass** die Mehrzahl von Segmenten (28) der Siegelkontur (4) mindestens vier, vorzugsweise mindestens sechs, mehr bevorzugt mindestens zwölf Segmente (28a-h) umfasst.

5. Verfahren nach einem der vorangehenden Ansprüche, **dadurch gekennzeichnet, dass** die Siegelkontur (4) im Wesentlichen ringförmig ausgebildet ist.

6. Verfahren nach einem der vorangehenden Ansprüche, **dadurch gekennzeichnet, dass** die Segmente (28a-h) der Mehrzahl von Segmenten (28) aneinander angrenzen und die Mehrzahl von Segmenten (28) durchgängig entlang der Siegelkontur (4) angeordnet ist, wobei Schritt b) entlang der gesamten Siegelnaht (40) erfolgt.

7. Verfahren nach einem der vorangehenden Ansprüche, **dadurch gekennzeichnet, dass** die Siegelvorrichtung (2) eine Mehrzahl von Heizelementen (22) und eine Mehrzahl von Sensorelementen (24) umfasst, wobei jedem Segment (28a-h) der Mehrzahl von Segmenten (28) jeweils ein Heizelement (22) und ein Sensorelement (24) zugeordnet ist, wobei Betriebsdaten der Mehrzahl von Heizelementen (22) und/oder der Mehrzahl von Sensorelementen (24) verwendet werden, um den Parameter (P) gemäß Schritt b) zu erfassen.

8. Verfahren nach einem der vorangehenden Ansprüche, **dadurch gekennzeichnet, dass** der Parameter (P), der kennzeichnend für die Siegelqualität ist, eine Temperatur (T) ist und die Siegelvorrichtung (2) gemäß Schritt b) die Temperatur (T) in jedem Segment (28a-h) der Mehrzahl von Segmenten (28) entlang der Siegelnaht (40) erfasst.

9. Verfahren nach einem der Ansprüche 1 bis 7, **dadurch gekennzeichnet, dass** der Parameter (P), der kennzeichnend für die Siegelqualität ist, ein Energiebedarf (E) eines Segments (28a-h) der Mehrzahl von Segmenten (28) während des Siegelns gemäß Schritt a) ist und die Siegelvorrichtung (2) gemäß Schritt b) den Energiebedarf (E) für jedes Segment (28a-h) der Mehrzahl von Segmenten (28) entlang der Siegelnaht (40) erfasst.

10. Verfahren nach Anspruch 2, **dadurch gekennzeichnet, dass** der Soll-Wert (Pₛₒₗₗ) des Parameters (P) ein vorbestimmter Wert ist.

11. Verfahren nach Anspruch 2, **dadurch gekennzeichnet, dass** Schritt c1) weiterhin das Ermitteln zumindest eines Vergleichswerts (V) der Ist-Werte (Pᵢₛₜ) des Parameters (P) zumindest eines Teils der Mehrzahl von Segmenten (28) umfasst, und der Soll-Wert (Pₛₒₗₗ) des Parameters (P) dem Vergleichswert (V) entspricht.

12. Verfahren nach einem der vorangehenden Ansprüche, **dadurch gekennzeichnet, dass** das Verfahren nach Schritt c) weiterhin umfasst:
Bestimmen einer Qualität (Q) der Siegelnaht (40) in Abhängigkeit von der gemäß Schritt c) erkannten Störung.

13. Verfahren nach Anspruch 2, **dadurch gekennzeichnet, dass** Schritt c2) weiterhin das Feststellen eins Grads der Abweichung (ΔP) umfasst und dass das Verfahren nach Schritt c) weiterhin umfasst: Einordnen der Verpackung (30) in eine Kategorie (K) aus zumindest einer ersten und einer zweiten Kategorie (K1, K2) in Abhängigkeit vom festgestellten Grad der Abweichung (ΔP), wobei jede Kategorie (K) kennzeichnend für eine bestimmte Qualität (Q) der Siegelnaht (40) ist.

14. Verfahren nach Anspruch 13, **dadurch gekennzeichnet, dass** das Verfahren nach dem Einordnen der Verpackung (30) in eine Kategorie (K) weiterhin den Schritt umfasst:
Weiterverarbeiten der Verpackung (30) in Abhängigkeit von der Kategorie (K), in die die Verpackung (30) eingeordnet wurde, wobei sich das Weiterverarbeiten für jede Kategorie (K) unterscheidet.

15. Siegelvorrichtung (2) zum Siegeln einer Deckfolie (36) an ein Formteil (32) mit zumindest einer Produktaufnahme (34), wobei die Siegelvorrichtung (2) umfasst:
eine Siegelkontur (4) zum Erzeugen einer Siegelnaht (40), wobei die Siegelkontur (4) in eine Mehrzahl von Segmenten (28) eingeteilt ist;
eine Mehrzahl von Heizelementen (22) und eine Mehrzahl von Sensorelementen (24), wobei jedem Segment (28a-h) der Mehrzahl von Segmenten (28) jeweils ein Heizelement (22) und ein Sensorelement (24) zugeordnet ist; und
eine Steuereinrichtung (12);
wobei die Siegelvorrichtung (2) dazu eingerichtet ist, mittels der Mehrzahl von Sensorelementen (24) und/oder der Mehrzahl von Heizelementen (22) in jedem Segment (28a-h) der Mehrzahl von Segmenten (28) jeweils einen Parameter (P) zu erfassen, der kennzeichnend für eine Siegelqualität der Siegelnaht (40) ist;
**dadurch gekennzeichnet, dass**
die Steuereinrichtung (12) dazu eingerichtet ist, basierend auf dem Parameter (P) eine Störung des Siegelns, insbesondere der Siegelnaht (40) oder der Siegelvorrichtung (2), zu erkennen.

## Claims

1. A method for producing and inspecting a package (30), in particular a heat-sealed plastic package, comprising at least one product cavity (34) in a formed part (32) sealed by a lidding film (36), wherein the method comprises the steps of:
(a) sealing the lidding film (36) to the formed part (32) along a seam (40), which surrounds the at least one product cavity (34), by means of a sealing device (2) comprising a sealing contour (4), which is divided into a plurality of segments (28); and
(b) detecting, by means of the sealing device (2), a parameter (P) characteristic of a sealing quality of the seam (40) in each segment (28a-h) of the plurality of segments (28) along the seam (40);
**characterized in that** the method further comprises the step of:
(c) detecting a problem with the sealing, in particular with the seam (40) or the sealing device (2), according to step (a) based on the parameter (P) detected according to step (b) in each segment (28a-h) of the plurality of segments (28).

2. The method according to claim 1, **characterized in that** step (b) comprises detecting an actual value (Pᵢₛₜ) of the parameter (P) in each segment (28a-h) of the plurality of segments (28), and that step (c) comprises the steps of:
(c1) comparing the detected actual value (Pᵢₛₜ) of the parameter (P) of each segment (28a-h) of the plurality of segments (28) with a nominal value (Pₛₒₗₗ) of the parameter (P) for each segment (28a-h) of the plurality of segments (28);
(c2) determining, for each segment (28a-h) of the plurality segments (28), whether there is a deviation (ΔP) between the actual value (Pᵢₛₜ) and the nominal value (Pₛₒₗₗ) of the parameter (P); and
(c3) detecting the problem with the sealing according to step (a) based on the deviation (ΔP) between the actual value (Pᵢₛₜ) and the nominal value (Pₛₒₗₗ) of the parameter (P) determined according to step (c2).

3. The method according to claim 1 or 2, **characterized in that** the seam (40) around the at least one product cavity (34) comprises a length which is between 10 mm and 1.200 mm, preferably between 25 mm and 600 mm, more preferably between 50 mm and 150 mm.

4. The method according to one of the preceding claims, **characterized in that** the plurality of segments (28) of the sealing contour (4) comprise at least four, preferably at least six, more preferably at least twelve segments (28a-h).

5. The method according to one of the preceding claims, **characterized in that** the sealing contour (4) is substantially ring-shaped.

6. The method according to one of the preceding claims, **characterized in that** the segments (28a-h) of the plurality of segments (28) are arranged adjacent to each other, and that the plurality of segments (28) are arranged continuously along the sealing contour (4), wherein step (b) is carried out along the entire seam (40).

7. The method according to one of the preceding claims, **characterized in that** the sealing device (2) comprises a plurality of heating elements (22) and a plurality of sensor elements (24), wherein one heating element (22) and one sensor element (24) are assigned to each segment (28a-h) of the plurality of segments (28), wherein operating data of the plurality of heating elements (22) and/or of the plurality of sensor elements (24) is used to detect the parameter (P) according to step (b).

8. The method according to one of the preceding claims, **characterized in that** the parameter (P) characteristic of the sealing quality is a temperature (T), and that the sealing device (2), according to step (b), detects the temperature (T) in each segment (28a-h) of the plurality of segments (28) along the seam (40).

9. The method according to one of claims 1 to 7, **characterized in that** the parameter (P) characteristic of the sealing quality is a power demand (E) of a segment (28a-h) of the plurality of segments (28) during the sealing according to step (a), and that the sealing device (2), according to step (b), detects the power demand (E) of each segment (28a-h) of the plurality of segments (28) along the seam (40).

10. The method according to claim 2, **characterized in that** the nominal value (Pₛₒₗₗ) of the parameter (P) is a predetermined value.

11. The method according to claim 2, **characterized in that** step (c1) further comprises the step of determining at least one comparison value (V) based on the actual values (Pᵢₛₜ) of the parameter (P) of at least some of the plurality of segments (28), and that the nominal value (Pₛₒₗₗ) of the parameter (P) corresponds to the comparison value (V).

12. The method according to one of the preceding claims, **characterized in that**, after step (c), the method further comprises the step of determining a quality (Q) of the seam (40) as a function of the problem detected according to step (c).

13. The method according to claim 2, **characterized in that** step (c2) further comprises the step of determining an extent of the deviation (ΔP), and that, after step (c), the method further comprises the step of assigning the package (30) to a category (K) of at least a first and a second category (K1, K2) as a function of the determined extent of the deviation (ΔP), wherein each category (K) is characteristic of a specific quality (Q) of the seam (40).

14. The method according to claim 13, **characterized in that**, after assigning the package (30) to a category (K), the method further comprises the step of:
processing the package (30) depending on the category (K) to which the package (30) has been assigned, wherein the processing is different for each category (K).

15. A sealing device (2) for sealing a lidding film (36) to a formed part (32) having at least one product cavity (34), wherein the sealing device (2) comprises:
a sealing contour (4) for producing a seam (40), wherein the sealing contour (4) is divided into a plurality of segments (28);
a plurality of heating elements (22) and a plurality of sensor elements (24), wherein one heating element (22) and one sensor element (24) are assigned to each segment (28ah) of the plurality of segments (28); and
a control unit (12);
wherein the sealing device (2) is configured to detect a parameter (P) characteristic of the sealing quality of the seam (40) in each segment (28a-h) of the plurality of segments (28) by means of the plurality of sensor elements (22) and/or the plurality or heating elements (24);
**characterized in that**
the control unit (12) is configured to detect a problem with the sealing operation, in particular with the seam (40) or the sealing device (2), based on the parameter (P).

## Revendications

1. Procédé de fabrication et de contrôle d'un emballage (30), notamment d'un emballage en matière plastique thermoscellé, qui comprend au moins un logement de produit (34) d'une pièce moulée (32), fermé au moyen d'une feuille de couverture (36), le procédé comprenant les étapes suivantes :
a) le scellement de la feuille de couverture (36) sur la pièce moulée (32) le long d'un joint de scellement (40) qui entoure l'au moins un logement de produit (34), au moyen d'un dispositif de scellement (2) qui présente un contour de scellement (4) qui est divisé en une pluralité de segments (28), et
b) la détection d'un paramètre (P) qui est caractéristique d'une qualité de scellement du joint de scellement (40) dans chaque segment (28a-h) de la pluralité de segments (28) le long du joint de scellement (40) par le dispositif de scellement (2),
**caractérisé en ce que** le procédé comprend en outre l'étape suivante :
c) l'identification d'une perturbation du scellement, notamment du joint de scellement (40) ou du dispositif de scellement (2), selon l'étape a), sur la base du paramètre (P) détecté selon l'étape b) dans chaque segment (28a-h) de la pluralité de segments (28).

2. Procédé selon la revendication 1, **caractérisé en ce que** l'étape b) comprend la détection d'une valeur réelle (P_{réel}) du paramètre (P) dans chaque segment (28a-h) de la pluralité de segments (28), et **en ce que** l'étape c) comprend :
c1) la comparaison de la valeur réelle détectée (P_{réel}) du paramètre (P) de chaque segment (28a-h) de la pluralité de segments (28) à une valeur de consigne (P_{consigne}) du paramètre (P) pour le segment respectif (28ah) ;
c2) l'établissement pour chaque segment (28a-h) de la pluralité de segments (28) de si un écart (ΔP) est présent entre la valeur réelle (P_{réel}) et la valeur de consigne (P_{consigne}) du paramètre (P),
c3) l'identification de la perturbation du scellement selon l'étape a) sur la base d'un écart (ΔP) entre la valeur réelle (P_{réel}) et la valeur de consigne (P_{consigne}) du paramètre (P) déterminé selon l'étape c2).

3. Procédé selon la revendication 1 ou 2, **caractérisé en ce que** le joint de scellement (40) autour du logement de produit (34) présente une longueur qui est comprise entre 10 mm et 1 200 mm, de préférence entre 25 mm et 600 mm, plus préférentiellement entre 50 mm et 150 mm.

4. Procédé selon l'une quelconque des revendications précédentes, **caractérisé en ce que** la pluralité de segments (28) du contour de scellement (4) comprend au moins quatre, de préférence au moins six, plus préférablement au moins douze segments (28a-h).

5. Procédé selon l'une quelconque des revendications précédentes, **caractérisé en ce que** le contour de scellement (4) est configuré sous forme essentiellement annulaire.

6. Procédé selon l'une quelconque des revendications précédentes, **caractérisé en ce que** les segments (28a-h) de la pluralité de segments (28) sont adjacents les uns aux autres et la pluralité de segments (28) est agencée en continu le long du contour de scellement (4), l'étape b) étant effectuée le long de l'ensemble du joint de scellement (40).

7. Procédé selon l'une quelconque des revendications précédentes, **caractérisé en ce que** le dispositif de scellement (2) comprend une pluralité d'éléments chauffants (22) et une pluralité d'éléments capteurs (24), un élément chauffant (22) et un élément capteur (24) étant associés respectivement à chaque segment (28ah) de la pluralité de segments (28), des données de fonctionnement de la pluralité d'éléments chauffants (22) et/ou de la pluralité d'éléments capteurs (24) étant utilisées pour détecter le paramètre (P) selon l'étape b) .

8. Procédé selon l'une quelconque des revendications précédentes, **caractérisé en ce que** le paramètre (P) qui est caractéristique de la qualité de scellement est une température (T) et le dispositif de scellement (2) détecte, selon l'étape b), la température (T) dans chaque segment (28a-h) de la pluralité de segments (28) le long du joint de scellement (40).

9. Procédé selon l'une quelconque des revendications 1 à 7, **caractérisé en ce que** le paramètre (P) qui est caractéristique de la qualité de scellement est une demande d'énergie (E) d'un segment (28a-h) de la pluralité de segments (28) pendant le scellement selon l'étape a) et le dispositif de scellement (2) détecte, selon l'étape b) la demande d'énergie (E) pour chaque segment (28a-h) de la pluralité de segments (28) le long du joint de scellement (40).

10. Procédé selon la revendication 2, **caractérisé en ce que** la valeur de consigne (P_{consigne}) du paramètre (P) est une valeur prédéterminée.

11. Procédé selon la revendication 2, **caractérisé en ce que** l'étape c1) comprend en outre la détermination d'au moins une valeur de comparaison (V) des valeurs réelles (P_{réel}) du paramètre (P) d'au moins une partie de la pluralité de segments (28), et la valeur de consigne (P_{consigne}) du paramètre (P) correspond à la valeur de comparaison (V).

12. Procédé selon l'une quelconque des revendications précédentes, **caractérisé en ce que** le procédé selon l'étape c) comprend en outre :
la détermination d'une qualité (Q) du joint de scellement (40) en fonction de la perturbation détectée selon l'étape c).

13. Procédé selon la revendication 2, **caractérisé en ce que** l'étape c2) comprend en outre l'établissement d'un degré de l'écart (ΔP) et **en ce que** le procédé selon l'étape c) comprend en outre : le classement de l'emballage (30) dans une catégorie (K) parmi au moins une première et une deuxième catégories (K1, K2) en fonction du degré établi de l'écart (ΔP), chaque catégorie (K) étant caractéristique d'une qualité (Q) déterminée du joint de scellement (40).

14. Procédé selon la revendication 13, **caractérisé en ce que** le procédé, après le classement de l'emballage (30) dans une catégorie (K), comprend en outre l'étape suivante :
le traitement ultérieur de l'emballage (30) en fonction de la catégorie (K) dans laquelle l'emballage (30) a été classé, le traitement ultérieur étant différent pour chaque catégorie (K).

15. Dispositif de scellement (2) pour sceller un film de couverture (36) sur une pièce moulée (32) avec au moins un logement de produit (34), le dispositif de scellement (2) comprenant :
un contour de scellement (4) pour créer un joint de scellement (40), le contour de scellement (4) étant divisé en une pluralité de segments (28) ;
une pluralité d'éléments chauffants (22) et une pluralité d'éléments capteurs (24), un élément chauffant (22) et un élément capteur (24) étant associés respectivement à chaque segment (28a-h) de la pluralité de segments (28) ; et
un appareil de commande (12) ;
le dispositif de scellement (2) étant conçu pour détecter, au moyen de la pluralité d'éléments capteurs (24) et/ou de la pluralité d'éléments de chauffage (22), dans chaque segment (28a-h) de la pluralité de segments (28), un paramètre (P) qui est caractéristique d'une qualité de scellement du joint de scellement (40) ;
**caractérisé en ce que**
l'appareil de commande (12) est conçu pour identifier, sur la base du paramètre (P), une perturbation du scellement, notamment du joint de scellement (40) ou du dispositif de scellement (2).
